Europäisches Patentamt

European Patent Office

Office européen des brevets

(19)

(11) **EP 0 898 395 A2**

(12) **EUROPÄISCHE PATENTANMELDUNG**

(43) Veröffentlichungstag:
24.02.1999 Patentblatt 1999/08

(51) Int. Cl.⁶: **H04L 7/04**

(21) Anmeldenummer: 98114745.7

(22) Anmeldetag: 05.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 21.08.1997 DE 19736434

(71) Anmelder:
NOKIA MOBILE PHONES LTD.
02150 Espoo (FI)

(72) Erfinder:
• Joeressen, Olaf J.
40235 Düsseldorf (DE)
• Schneider, Gregor
44787 Bochum (DE)
• Zwickler, Uwe
44787 Bochum (DE)

(74) Vertreter:
TER MEER STEINMEISTER & PARTNER GbR
Mauerkircherstrasse 45
81679 München (DE)

(54) **Verfahren und Vorrichtung zur Erkennung der Position von in einem seriellen Datenempfangsstrom liegenden Datenpaketen**

(57)    Beschrieben wird die Erkennung der Position von in einem seriellen Empfangsdatenstrom liegenden Datenpaketen (P1, P2, ...), die jeweils Prüfdaten in einem Prüffeld und eine anhand der Prüfdaten gebildete Prüfsumme (CRC) aufweisen, wobei der Empfangsdatenstrom seriell durch wenigstens eine Vergleichseinheit (9) hindurchgeschoben wird, die mit jedem neu hinzukommenden Empfangssymbol eine neue Prüfsumme (CRC') bildet und diese mit Daten, die für die zugehörige empfangene Prüfsumme (CRC) angesehen werden, vergleicht, und wobei ferner beim Vergleichen der Einfluß aller Daten eliminiert wird, die nicht zu den Prüfdaten und der Prüfsumme (CRC) gehören.

Fig. 5

**Beschreibung**

Die Erfindung betrifft ein Verfahren und Vorrichtungen zur Erkennung der Position von in einem seriellen Empfangsdatenstrom liegenden Datenpaketen gemäß den Ansprüchen 1 bzw. 11 und 17.

Datenpakete in dem hier zugrundegelegten Übertragungssystem enthalten einen Teil mit festgelegter Länge und einen Teil mit variabler Länge. Der Teil mit fester Länge kann als Prüffeld bezeichnet werden und enthält Informationen über die Länge des Teils mit variabler Länge.

Werden die Datenpakete über einen Kanal gesendet, der verrauscht ist, so können sie auf dem Übertragungsweg, beispielsweise bei der paketorientierten digitalen Funkübertragung, gestört werden. Es können auch ganze Pakete verlorengehen.

Innerhalb des Datenstroms sollen jedoch die Anfänge und die Enden der jeweiligen Datenpakete auf der Empfängerseite festgestellt werden. Um die Erkennung eines Datenpakets auf der Empfängerseite zu ermöglichen, also eine Paketposition zu identifizieren, wird üblicherweise senderseitig eine bekannte Bitsequenz in den Datenstrom eingebracht. Zur selben Zeit stellt eine Logik sicher, daß dazu identische Bitsequenzen aus dem Datenstrom eliminiert werden. Dies wird gewöhnlich durch zusätzliche Symbole erreicht, die zwar das Wort verändern, jedoch die zu übertragende Nutzinformation ansonsten unverändert lassen.

Eine andere Möglichkeit wäre. Nebeninformation in die Bündelstruktur des Systems, welches die Daten überträgt, mit zu übermitteln.

Bekannt ist es bei der herkömmlichen Datenübertragung weiterhin, zur Überprüfung der Übertragung auf Fehler eine Prüfsumme in das abzusendende Datenpaket einzufügen, die anhand von in einem Prüffeld liegenden Prüfdaten gebildet wird. Auf der Empfängerseite wird dann aus den empfangenen Prüfdaten eine neue Prüfsumme in gleicher Weise gebildet, die mit der empfangenen Prüfsumme verglichen wird. Ergibt sich bei diesem Vergleich eine Übereinstimmung, war die Übertragung fehlerfrei.

Der Erfindung liegt die Aufgabe zugrunde, ein Verfahren und Vorrichtungen der eingangs genannten Art so weiterzubilden, daß sich die Position eines Datenpakets in einem kontinuierlichen Datenstrom einfacher ermitteln läßt.

Die verfahrensseitige Lösung der gestellten Aufgabe ist im Anspruch 1 angegeben. Dagegen finden sich vorrichtungsseitige Lösungen der gestellten Aufgabe in den nebengeordneten Ansprüchen 11 und 17.

Beim erfindungsgemäßen Verfahren zur Erkennung der Position von in einem seriellen Empfangsdatenstrom liegenden Datenpaketen, die jeweils Prüfdaten in einem Prüffeld und eine anhand der Prüfdaten gebildete Prüfsumme aufweisen, wird der Empfangsdatenstrom seriell durch wenigstens eine Vergleichseinheit hindurchgeschoben, die mit jedem neu hinzukommenden Empfangssymbol eine neue Prüfsumme bildet und diese mit Daten, die für die zugehörige empfangene Prüfsumme angesehen werden, vergleicht, wobei ferner beim Vergleichen der Einfluß aller Daten eliminiert wird, die nicht zu den Prüfdaten und der Prüfsumme gehören. Als Empfangssysmbol kann z. B. ein jeweils neu hinzukommendes Bit des Datenstroms angesehen werden. Es kann sich aber auch bei dem Empfangssymbol um eine Gruppe von Bits mit vorbestimmter Anzahl handeln.

Nach der Erfindung wird also auf der Empfängerseite der serielle Datenstrom kontinuierlich nach gültigen Codewörtern abgesucht, zu denen die Daten des Prüffelds und die Daten der Prüfsumme gehören. Nur wenn die empfangene Prüfsumme und die empfängerseitig aus den empfangenen Prüfdaten gebildete Prüfsumme übereinstimmen, wurde ein gültiges Codewort gefunden und somit die Position des Datenpakets im Datenstrom erkannt. Gleichzeitig liegt dann auch ein fehlerfreier Empfang der Daten des Prüffelds vor, so daß jetzt sichere Information z. B. über die Länge des gesamten Datenpakets zur Verfügung steht. Da nach der Erfindung der empfangene Datenstrom kontinuierlich nach den Codewörtern abgesucht wird, muß dafür gesorgt werden, daß außerhalb der Codewörter liegende Daten bzw. Bits keinen Einfluß auf den zuvor genannten Vergleich haben.

Der Einfluß dieser Daten bzw. Bits auf den Vergleich wird daher eliminiert, um zu einer einwandfreien Positionserkennung zu gelangen.

Die erfindungsgemäße Lösung hat folgende Vorteile gegenüber den bisher bekannten Lösungen:

1. Das erfindungsgemäße Verfahren ist der einfachen Einfügung einer bekannten Bitsequenz zur Erkennung der Position von Datenpaketen überlegen, weil bei der Erfindung die eingefügte Bitsequenz vom Empfänger nur korrekt identifiziert wird, wenn nicht nur die Bitsequenz selbst, sondern auch ein Teil des Pakets mit fester Länge fehlerfrei empfangen wurde. Deswegen unterstützt die Erfindung nicht nur die Rahmesynchronisation, sondern hilft auch sicherzustellen, daß wertvolle Daten, die sich im Prüffeld befinden, z. B. Längeninformation, korrekt empfangen werden.

2. Die Erfindung stellt keine Anforderungen an das zugrundeliegende Übermittlungsschema und verlangt nicht, daß die Pakete auf eine bestimmte Art und Weise in ein gerade zu übertragendes Bündel eingefügt werden müssen. Das heißt also, daß die absolute Position von Datenfeldern in den Datenpaketen nicht vorgeschrieben ist. Ferner müssen z. B. das Feld für die Prüfsumme und das Prüffeld selbst, anhand dessen Daten die Prüfsumme gebildet worden ist, nicht direkt aufeinanderfolgen.

3. Die Erfindung kann darüber hinaus mit geringem Aufwand und auf kleiner Fläche als Hardware in einem digitalen integrierten Schaltkreis realisiert werden.

Ausführungsbeispiele der Erfindung werden nachfolgend unter Bezugnahme auf die Zeichnung im einzelnen beschrieben. Es zeigen:

Figur 1 ein Modell eines Übertragungssystems:
Figur 2 ein Datenpaket in dem Übertragungssystem nach Figur 1;
Figur 3 eine Schaltungsanordnung zur Einfügung eines CRC-Prüfcodes (Code zur zyklischen Redundanz-Überprüfung bzw. Cyclic Redundancy Check Code) in einen kontinuierlichen Datenstrom;
Figur 4 einen CRC-Generator zur Erzeugung des CRC-Prüfcodes;
Figur 5 eine Schaltungsanordnung zur gleitenden CRC-Auswertung in einem kontinuierlichen Datenstrom:
Figur 6 eine in der Schaltungsanordnung nach Figur 5 verwendete CRC-Vergleichseinrichtung;
Figur 7 eine schematische Darstellung zur Erläuterung einer Bündelübertragung von Datenpaketen:
Figur 8 eine empfängerseitige Schaltungsanordnung mit der Schaltungsanordnung nach Figur 5 und einer nachgeschalteten Stufe zur CRC-Entfernung und Datenweiterverarbeitung; und
Figur 9 eine Schaltungsanordnung nach einem weiteren Ausführungsbeispiel der Erfindung.

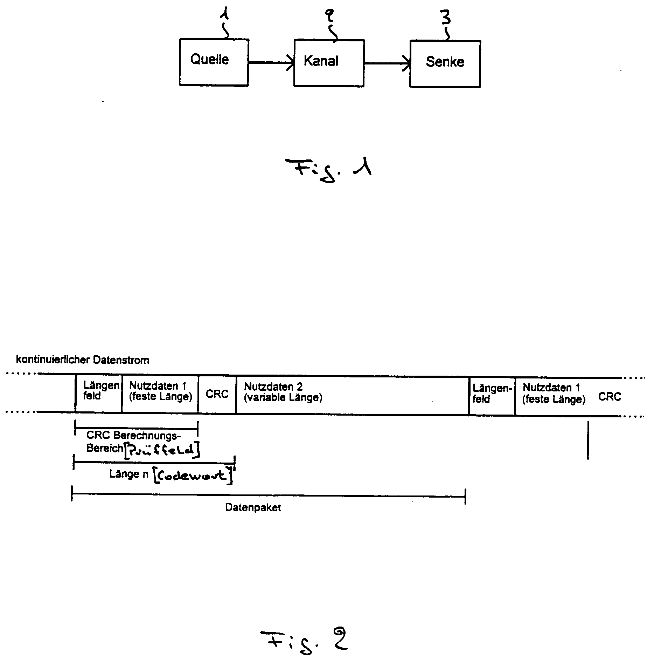

In Übertragungssystemen treten aufgrund von Eigenschaften des Übertragungskanals häufig Fehler auf. Ein hier beschriebenes Übertragungssystem gemäß Figur 1 besteht aus einer als Sender ausgebildeten Quelle 1, die Daten über einen Übertragungskanal 2 zu einem als Senke 3 ausgebildeten Empfänger verschickt. Bei dem Übertragungskanal 2 kann es sich um einen Funkkanal handeln.

Das Übertragungssystem sendet Datenpakete in einer seriellen Sequenz in Bündeln, sogenannten Bursts, aus. Treten Fehler im Übertragungskanal auf, so können u. U. komplette Bündel verlorengehen, so daß die beim Empfänger ankommenden Daten unbrauchbar sind.

Dies ist besonders kritisch bei der Übertragung von Datenpaketen mit variabler Länge, bei der der Empfänger der Datenpakete den Anfang des nächsten Datenpaketes unmittelbar nach dem vorangegangenen Datenpaket erwartet. Deshalb wird die Länge des Datenpaketes stets in einem zum Paket gehörenden Kopfteil übertragen. Falls diese Längeninformation aufgrund von Übertragungsfehlern oder dem Verlust von Bündeln nicht richtig empfangen wird, kann der Empfänger das nächste Datenpaket nicht finden. Es muß daher gewährleistet sein, daß der Anfang der jeweiligen Datenpakete sicher detektiert werden kann.

Gemäß Figur 2, die den Aufbau von Datenpaketen in einem kontinuierlichen Datenstrom zeigt, wird daher in jedes der Datenpakete senderseitig eine Prüfsumme eingefügt, bevor die Datenpakete verschickt werden, beispielsweise über ein digitales Funkübertragungssystem. Bei der Prüfsumme kann es sich um einen CRC-Code handeln, also um einen Code zur zyklischen Redundanz-Überprüfung (Cyclic Redundancy Check Code). Die Prüfsumme kann aber auch in anderer Weise gebildet werden, falls gewünscht.

Jedes Datenpaket gemäß Figur 2 weist einen ersten Teil mit einer festen Länge auf, der als CRC-Berechnungsbereich bzw. Prüffeld bezeichnet wird. Zu diesem CRC-Berechnungsbereich gehören ein Längenfeld und ein Nutzdatenfeld für Nutzdaten 1. Im Längenfeld befindet sich u. a. Information über die Länge des gesamten Datenpakets. Bei den Nutzdaten 1 kann es sich um solche handeln, die als schützenswert betrachtet werden.

Der CRC-Code, welcher in das Datenpaket eingefügt wird, wird über einen Teil oder über den gesamten Bereich mit fester Länge berechnet, z. B. über einen Teil oder über den gesamten Bereich des CRC-Berechnungsbereichs. Dieser eingefügte CRC-Code wird auf der Empfängerseite dazu verwendet, die Paketposition zu bestimmen. Er dient darüber hinaus wenigstens dazu, die Längeninformation zu schützen.

Vorzugsweise ist der Teil des Datenpakets, der durch den CRC-Code geschützt wird, ein zusammenhängender Bereich vor derjenigen Position, an der der CRC-Code eingefügt wird. Obwohl dies nicht generell erforderlich ist, erleichtert dies die Implementierung und wird in der weiteren Beschreibung vorausgesetzt.

Die Paketstruktur gemäß Figur 2 umfaßt also vor der Übertragung das Längenfeld, nachfolgend das Feld für Nutzdaten 1, daran anschließend das Feld für den CRC-Code und schließlich das Feld mit variabler Länge für die Nutzdaten 2, wobei die Informationen über die Länge des Nutzdatenfelds 2 im Längenfeld vorhanden ist. Dabei schützt der CRC-Code sowohl das Längenfeld als auch das Nutzdatenfeld 1. Zusätzlich wird der CRC-Code empfängerseitig dazu verwendet, den Anfang des Datenpakets oder eine andere bestimmte Position eines gewünschten Datenblocks zu erkennen.

Um dies zu erreichen, wird empfängerseitig ein Codewort überprüft, das der Länge n entspricht. Der Wert n ist hierbei die Anzahl der Bits, die zum Längenfeld, zum Feld für die Nutzdaten 1 und zum CRC-Code gehören.

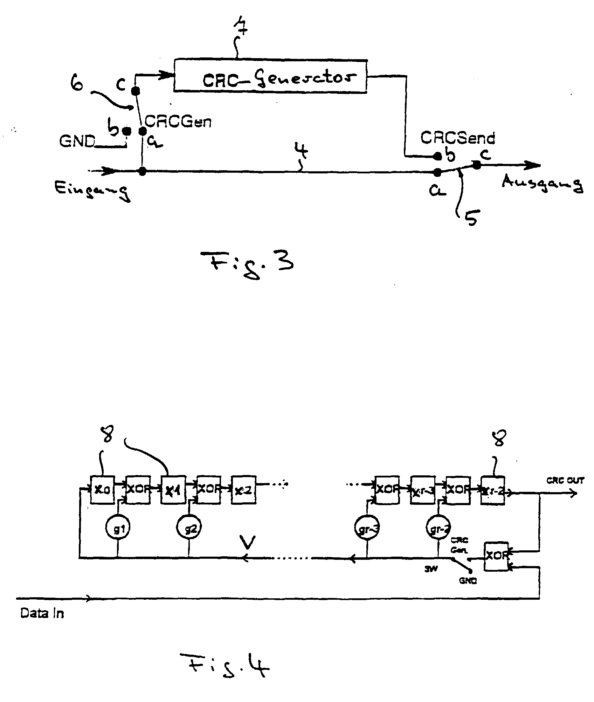

Die Figur 3 zeigt eine Schaltunganordnung, mit deren Hilfe der CRC-Code erzeugt und in den kontinuierlichen Datenstrom eingefügt wird.

Eine Datenleitung 4 erstreckt sich von einem Eingang über einen ersten Schaltkontakt a eines ersten Umschalters 5 und dessen gemeinsamen Kontakt c zu einem Ausgang. Ferner ist der Eingang über einen ersten Schaltkontakt a eines zweiten Umschalters 6 und dessen gemeinsamen Kontakt c mit einem Eingang eines CRC-Generators 7 verbunden, dessen Ausgang mit einem zweiten Schaltkontakt b des ersten Umschalters 5 verbunden ist. Ein zweiter Schaltkontakt b des zweiten Umschalters 6 liegt auf Referenzpotential GND (Erde). Der gemeinsame Kontakt c des ersten Umschalters 5 führt über weitere Verarbeitungsstufen zum Übertragungskanal.

Wird das Datenpaket nach Figur 2, welches noch nicht den CRC-Code (Prüfsumme) beinhaltet, der Schaltungsanordnung gemäß Figur 3 über den Eingang zugeführt, so gelangen das Längenfeld und das Feld für die Nutzdaten 1 sowohl zum Ausgang der Schaltungsanordnung als auch gleichzeitig zum Eingang des CRC-Generators 7. Die Schalterstellungen entsprechen jetzt den in Figur 3 gezeigten Stellungen. Nachdem der CRC-Generator den gesamten CRC-Berechnungsbereich empfangen und den CRC-Code berechnet hat, werden der erste Umschalter 5 und der zweite Umschalter 6 umgeschaltet, so daß jetzt der berechnete CRC-Code über den ersten Umschalter 5 zum Ausgang gelangt. Anschließend wird der erste Umschalter 5 erneut umgeschaltet, so daß jetzt die Nutzdaten 2 im Feld variabler Länge über die Datenleitung 4 zum Ausgang übertragen werden können.

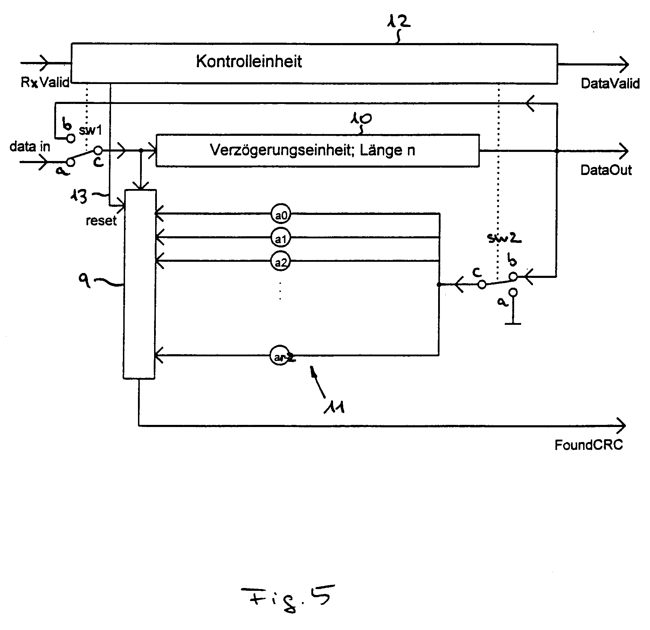

Der CRC-Generator 7 berechnet den CRC-Code über das Prüffeld (z. B. 48 Bit) und weist den in Figur 4 dargestellten Aufbau auf.

Die Datenbits des Prüffelds werden in den CRC-Generator geleitet. Dieser besteht in an sich bekannter Weise aus r- 1 Verzögerungselementen bzw. Flip-Flops 8 (z. B. 24 Stück), die jeweils untereinander über ein XOR-Gatter verknüpft sind. Jeweils einem Eingang eines XOR-Gatters wird ein Ausgangssignal eines Verzögerungselements zugeführt, während am anderen Eingang des XOR-Gatters jeweils der mit gi gewifhtete Eingangswert V anliegt, der ein Koeffizient eines vom CRC-Generators berechneten Polynoms G(x) ist. Das Polynom G(x) kann die Form

$$G(x) = g_{r-1}x^{r-1} + g_{r-2}x^{r-2} + ... + g_1 x + g_0$$

mit $g_{r-1} = 1$; $g_0 = 1$
r-1: Grad des Polynoms G(x)
aufweisen.

Der Ausgang des CRC-Generators, der zum ersten Schalter 5 geführt wird, liegt darüber hinaus am Eingang eines weiteren XOR-Gatters, an dessen anderen Eingang die Eingangsdaten angelegt werden. Der Ausgang dieses XOR-Gatters ist über einen Schalter sw mit dem ersten Verzögerungselement $x_0$ verbunden und über die Gewichtungsfaktoren gi mit den XOR-Gattern der Verzögerungskette.

Soll ein CRC-Code berechnet werden, wird der Schalter sw in Stellung CRC Gen gebracht. Werden jetzt die Daten des Prüffelds der Reihe nach eingegeben, stehen am Ende dieses Vorgangs die CRC-Bits in den Registern $x_0$ bis $x_{r-2}$. Der Schalter sw wird jetzt auf Referenzpotential Gnd gelegt. Das heißt, daß bei Jedem weiteren Takt Nullen in die Register geschoben werden. Gleichzeitig werden die berechneten CRC-Bits seriell aus dem CRC-Generator herausgeschoben.

Der in den Datenstrom eingefügte CRC-Code von r-1 Bit bildet zusammen mit dem CRC-Berechnungsbereich von Figur 2 das Codewort, das im vorliegenden Fall n=72 Bit lang ist.

Auf der Empfängerseite benötigt die Einheit, die die empfangenen Datenpakete weiterverarbeiten soll, die Längeninformation eines jeweiligen Pakets, um den Anfang des folgenden Datenpakets zu bestimmen. Dies setzt voraus, daß die Position des Längenfelds immer bekannt ist. Das heißt auch, daß sich die Einheit nicht wieder synchronisieren kann, wenn die Längeninformation einmal gestört wurde, weil der Beginn des nächsten Datenpakets nicht mehr bestimmt werden kann.

Die gesamte Verarbeitungseinheit lost diese Probleme durch das Auffinden gültiger Codewörter wie folgt:

- Ist die CRC-Erkennung erfolgreich, so ist erstens die Position des Datenpakets bekannt;

- in dem Fall ist auch die Zuverlässigkeit der übertragenen Daten im CRC-Berechnungsbereich, insbesondere die Längeninformation, gesichert.

Wenn andererseits die CRC-Erkennung mißlingt, heißt das, daß die Daten gestört sind, und daß die Längeninformation wahrscheinlich nicht richtig ist. In diesem Fall muß die Prozessoreinheit warten, bis mit Hilfe der CRC-Erkennung wieder Synchronisation hergestellt werden kann.

Die Figur 5 zeigt eine Schaltungsanordnung zum Erkennen der Position eines Datenpakets in einem kontinuierlichen bzw. bitseriellen Datenstrom.

Diese Schaltungsanordnung weist eine CRC-Vergleichseinrichtung 9 auf, die aus einem Schieberegister der Länge r-1 Bit besteht, wie noch erläutert werden wird. Der CRC-Vergleichseinrichtung 9 werden eingangsseitig über einen Umschalter sw1 die seriellen Eingangsdaten zugeführt. Der gemeinsame Kontakt c des Umschalters sw1 ist hierbei mit einem Eingangskontakt a verbunden, der mit dem Eingang der Schaltungsanordnung verbunden ist. In dieser Schaltstellung gelangen die Eingangsdaten auch in eine Verzögerungseinheit 10, deren Eingang mit dem Eingang der CRC-Vergleichseinrichtung 9 verbunden ist. Die Verzögerungseinheit 10 besteht aus einem Schieberegister der Länge n, wobei deren Ausgang mit dem Ausgang der Schaltungsanordnung nach Figur 5 verbunden ist. Der Ausgang der Verzögerungseinheit 10 ist darüber hinaus mit einem weiteren Kontakt b des Umschalters sw1 verbunden, um nach Umschaltung des Umschalters sw1 auf den Eingang der Verzögerungseinheit 10 bzw. den Eingang der CRC-Vergleichseinrichtung 9 geführt werden zu können. Ferner ist der Ausgang der Verzögerungseinheit 10 mit einem Schaltkontakt b eines Umschalters sw2 verbunden, um über diesen und seinem gemeinsamen Kontakt c einer Rückkopplungsstufe 11 mit den Gewichtungsfakten $a_i$ zugeführt werden zu können. Diese Rückkopplungsstufe 11 löscht den Einfluß der Datenbits, die die Verzögerungseinheit 10 verlassen, aus der CRC-Vergleichseinrichtung 9, so daß die Gedächtnistiefe der CRC-Vergleichseinrichtung 9 auf n reduziert wird.

Eine Kontrolleinheit 12 dient zur Umschaltung der Schalter sw1 und sw2 in Abhängigkeit eines Eingangssignals RxValid, das in Abhängigkeit des Vorhandenseins von Bündeln (Bursts) erzeugt wird. Wird ein Bündel übertragen, so ist RxValid gleich eins, sonst null. Die Kontrolleinheit 12 liefert darüber hinaus in ihrem Ausgang ein Signal DataValid, das angibt, wann Daten am Ausgang der Verzögerungseinheit 10 als gültige Daten anzusehen sind.

Ferner ist die Kontrolleinheit 12 noch mit einer Leitung 13 mit der CRC-Vergleichseinrichtung 9 verbunden, um letztere rücksetzen zu können.

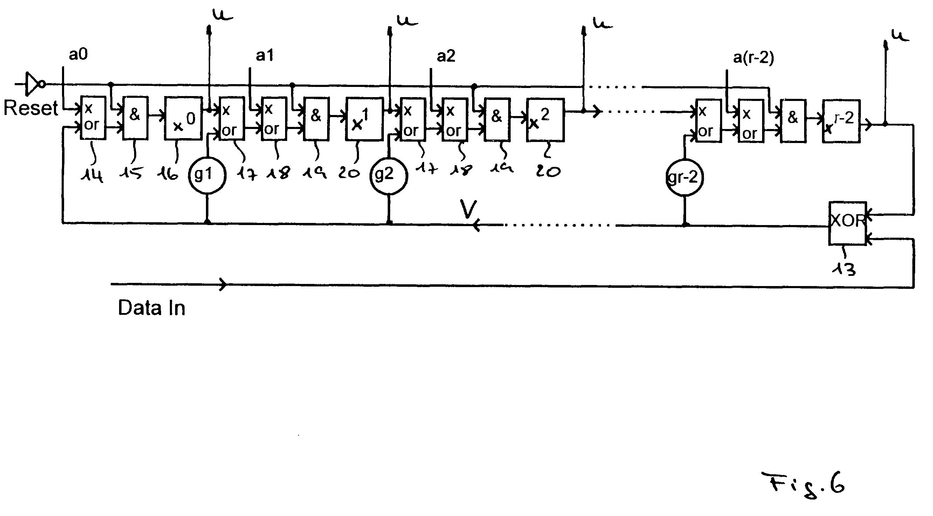

Der Aufbau der CRC-Vergleichseinrichtung 9 ist in Figur 6 gezeigt. Hier handelt es sich um einen modifizierten Aufbau eines rückgekoppelten Schieberegisters wie aus Figur 4 als hardware-effiziente Lösung zur Erkennung eines CRC-Codes. Das Polynom, mit welchem dieser CRC-Code erzeugt wird, läßt sich folgendermaßen beschreiben:

$$G(x) = g_{r-1}x^{r-1} + g_{r-2}x^{r-2} + \ldots g_1 x + g_0$$

Das Polynom ist identisch mit der CRC-Berechnungseinheit aus Figur 4. Der Hardwareaufbau ist gegenüber der CRC -Berechnungseinheit aus Figur 4 um die parallelen Eingange $a_i$ und die Ausgänge u erweitert.

Die CRC-Vergleichseinrichtung 9 enthält ein XOR-Gatter 13, dessen einem Eingang der kontinuierliche Datenstrom zugeführt wird. Der Ausgang dieses XOR-Gatters 13 ist dem einen Eingang eines weiteren XOR-Gatters 14 zugeführt, dessen anderer Eingang mit der Rückkopplungsstufe 11 verbunden ist, um von dort den mit $a_i$ gewichteten Verzögerungswert zu empfangen. Der Ausgang des XOR-Gatters 14 ist mit einem Eingang eines UND-Gatters 15 verbunden, an dessen anderem Eingang ein Reset-Signal anlegbar ist. Der Ausgang des UND-Gatters 15 ist mit dem Eingang eines Verzögerungselements 16 (Flip-Flop) verbunden. Der Ausgang dieses Flip-Flops 16 wird der nächsten Stufe der CRC-Vergleichseinrichtung 9 zugeführt.

Diese nächste und alle folgenden Stufen der CRC-Vergleichseinrichtung 9 bestehen jeweils aus einem XOR-Gatter 17, das an einem Eingang den Ausgang der vorhergehenden Stufe empfängt und an einem anderen Eingang den mit gi gewichteten Rückführungwert V. Der Ausgang des XOR-Gatters 17 ist mit dem Eingang eines weiteren XOR-Gatters 18 verbunden, das in seinem anderen Eingang den mit $a_i$ gewichteten Verzögerungswert von der Rückkopplungsstufe 11 empfängt. Der Ausgang des XOR-Gatters 18 ist mit einem Eingang eines UND-Gatters 19 verbunden, das an seinem anderen Eingang das Rücksetzsignal empfangen kann, während der Ausgang des UND-Gatters wiederum mit dem Eingang des Verzögerungselements (Flip-Flop) 20 dieser Stufe verbunden ist, usw. Insgesamt sind die Stufen 0, 1, ..., r-2 vorhanden. Der Ausgang des letzten Verzögerungselements ist auf den anderen Eingang des XOR-Gatters 13 geführt.

Die an die jeweiligen XOR-Gatter 14, 18, ... gelieferten Koeffizienten $a_i$ sind die Koeffizienten des Restes der Polynomdivision

$x^n : G(x)$.

Hierin ist n wieder die Länge des Codeworts.

Die CRC-Vergleichseinrichtung 9 verarbeitet ununterbrochen die über den Schalter sw1 eingehenden Daten, die zur selben Zeit mittels der Verzögerungseinheit 10 um n Bit verzögert werden. Nachdem ein angekommenes Datenbit um n Taktpulse verzögert worden ist, muß sein Einfluß auf die CRC-Berechnung eliminiert werden, so daß der CRC-Code sich nur anhand der zuletzt erhaltenen n Bit ergibt. Die Eliminierung erfolgt dadurch, daß die Pulsantwort des einzelnen Bits vom CRC-Registerinhalt subtrahiert wird (durch XOR-Verknüpfung). Mathematisch läßt sich die Pulsantwort als Rest der Division

$x^n/G(x)$

darstellen. Auf diese Weise läßt sich die ursprüngliche infinite Speichertiefe des CRC auf die relevanten n letzten Bits reduzieren.

Die gleitende Erkennung der CRC-Position setzt in Figur 5 voraus, daß der Schalter sw1 in der Position a ist, so daß der ankommende Datenstrom direkt zur CRC-Vergleichseinrichtung 9 sowie zur Verzögerungseinheit 10 geleitet wird. Weiterhin muß zur gleitenden Erkennung der Schalter sw2 in Position b sein. Beim Start des Empfängers wird der Inhalt aller Register zunächst "null" sein (CRC und Verzögerungseinheit).

Während also die CRC-Erkennung in der CRC-Vergleichseinrichtung 9 erfolgt, werden die Daten zusätzlich in die Verzögerungseinheit 10 geleitet. Sobald die Daten aus der Verzögerungseinheit 10 herausgeschoben werden, werden diese über den Schalter sw2 und die Rückkopplungsstufe 11 zur CRC-Vergleichseinrichtung 9 zurückgekoppelt, um auf diese Weise durch XOR-Verknüpfung (exklusiv oder) den Einfluß von Daten auf die CRC-Berechnung zu eliminieren, die älter als n Taktzyklen sind. Auf diese Weise kann die CRC-Vergleichseinrichtung 9 nur unter Heranziehung der gültigen n Bit des Codeworts die Position eines Datenpakets exakt erkennen. Dabei wird letztlich in der CRC-Vergleichseinrichtung 9 aufgrund des empfangenen CRC-Berechnungsbereichs eine neue Prüfsumme CRC' gebildet und diese mit Daten, die für die zugehörige empfangene Prüfsumme CRC angesehen werden, verglichen. Erst wenn die n Bit des Codeworts durch die CRC-Vergleichseinrichtung 9 verarbeitet worden sind und darüber hinaus vollständig in der Verzögerungseinheit 10 stehen, liefert die CRC-Vergleichseinrichtung an ihrem Ausgang das gewünschte Signal Found CRC. Dieser Ausgang wird dadurch erhalten, daß die Ausgänge der jeweiligen Verzögerungselemente 16, 20, ... über Leitungen u einem NOR-Gatter (nicht dargestellt) zugeführt werden, an dessen Ausgang das Signal Found CRC erscheint.

Falls das zugrundeliegende Übertragungsschema auf einer Bündelübertragung basiert (Übertragung durch Bursts), wird der Schaltungsanordnung nach Figur 5 bzw. der Kontrolleinheit 12 ein zusätzliches Signal RxValid zugeführt, um anzuzeigen, zu welchen Taktzyklen Daten empfangen werden. Auf diese Weise erkennt die Schaltungsanordnung das Ende eines empfangenen Bündels und kann den Inhalt der Verzögerungseinheit 10 herausschieben, um die Verzögerung von Daten zu vermeiden, bis der Empfang des nächsten Bündels beginnt.

Dabei ist die Bündelstruktur in Figur 7 dargestellt. Gezeigt sind zwei Bündel B1 und B2 mit jeweiligen Datenpaketen P1, P2, ... P6. Das Datenpaket P3 konnte im Bündel B1 nicht mehr vollständig übertragen werden und wird daher zu Anfang des Bündels B2 fortgesetzt.

Der folgende Ablauf beschreibt die Verwendung der Schalter sw1 und sw2 während der Bündelübertragung`

Es wird angenommen, daß die Paketränder sich nicht mit den Rändern der Bündel B1, B2 decken, so daß Teile der Pakete in aufeinanderfolgenden Bündeln übertragen werden, Es können auch CRC-Felder in verschiedene Bündel aufgeteilt werden, weil die Paketstruktur u. U. nicht in der Einheit bekannt ist, die die Bündel zusammensetzt.

Die Figur 7 zeigt, daß das Paket P3 in zwei aufeinanderfolgenden Bündeln übertragen wird, wie bereits erwähnt. Das Paket P6 kann im zweiten Bündel beendet sein oder wird im nächsten Bündel fortgesetzt.

Grundsätzlich kann die CRC-Erkennung beim Empfänger zwischen den Bündeln B1, B2 unterbrochen werden. Die der CRC nachfolgende Einheit, welche die Daten von der CRC-Einheit bekommt, wird dann jedoch die letzten n Bit des gerade empfangenen Pakets erst bekommen, wenn die CRC-Einheit beim nächsten empfangenen Bündel wieder zu arbeiten beginnt.

Dies verursacht u. U. unerwünscht lange Verzögerungen für manche Pakete.

Eine Lösung besteht im nachfolgend beschriebenen Verfahren:

**1. Erstes Bündel wird verarbeitet, Verzögerungseinheit 10 enthält keine gültigen Daten (ist leer):** sw1 und sw2 in Position a, DataValid = 0, RxValid = 1; CRC-Einheit wurde zurückgesetzt und verarbeitet die empfangenen Daten. Die Daten werden gleichzeitig in die Verzögerungseinheit 10 geschoben. Dieser Zustand bleibt für die ersten n Taktzyklen erhalten, bis die Verzögerungseinheit 10 vollständig mit Daten gefüllt ist.

**2. Normale Verarbeitung, Verzögerungseinheit 10 enthält gültige empfangene Daten:** sw1 in Position a, sw2 in Position b, DataValid = 1, RxValid = 1; die CRC-Einheit verarbeitet die neuen Daten und subtrahiert den Effekt auf die berechneten CRC-Ausgabedaten. Die neuen Daten werden in die Verzögerungseinheit 10 geschoben. Kontinuierliche Überpprüfung auf gültige CRC-Codewörter.

**3. Ende des Datenbündels:** Rx wechselt von 1 nach 0. Rücksetzen der CRC-Einheit auf "0" mit Reset Signal von der Kontrolleinheit 12. Hierbei gilt: DataValid = 1.

**4. Daten, die sich in der Verzögerungseinheit 10 befinden, weiterleiten und zirkulieren:** Schalter sw1 in Position b und Schalter sw2 in Position a, DataValid = 1, RxValid = 0; Inhalt der Verzögerungseinheit 10 läuft einmal um (n Taktzyklen) und leitet dadurch die Daten weiter und gleichzeitig zurück in die CRC-Einheit; Neuberechnung in der CRC-Einheit mit Rücklaufdaten über n Taktzyklen.

**5. Warten auf das nächste Datenbündel.**

**6. Nächstes Bündel ist zu verarbeiten, Verzögerungseinheit enthält zirkulierte Daten:** Schalter sw1 in Position a, Schalter sw2 in Position b. DataValid = 0, RxValid = 1; gleicher Vorgang wie unter 2 aber mit DataValid = 0: dieser Zustand besteht für n Taktzyklen.

**7. Gehe zu 2.**

Dieses Verfahren schiebt die gesamten Daten am Ende des Bündels aus der Verzögerungseinheit 10 heraus.

Zusätzlich wird die CRC-Einheit nach jedem Bündel zurückgesetzt. Deshalb wird die CRC-Einheit auch dann einwandfrei nach jedem Rücksetzen arbeiten, wenn unbekannte interne Fehler aufgetreten sein sollten.

Um desweiteren die Wahrscheinlichkeit von falschen Erkennungen von (korrekten) Codewörtern zu minimieren, kann das CRC Found Signal mit einem weiteren Taktsignal verknüpft werden. Z. B. wenn bekannt ist, daß das Datenpakt nur jeweils nach k Takten beginnen kann (z. B. ist k eine Byte- oder Wortgrenze) .

Es ist anzumerken, daß das oben beschriebene Verfahren erfordert, daß mindestens n Taktzyklen zwischen den aufeinanderfolgenden Bündeln existieren, um die Daten in der Verzögerungseinheit vollständig umlaufen lassen zu können.

**Lösungsvariante:**

Ein etwas anderes Verfahren könnte ein Scheiberegister beinhalten, welches das RxValid Signal um n Taktzyklen verzögert, um das DataValid Signal zu erzeugen Dieser Ansatz erfordert nicht, daß Blöcke von einer Mindestlänge von n Bits empfangen werden müssen. Die Benutzung einer Verzögerungsschaltung 10 ist allerdings nur effizient für kleine Werte von n. Falls n groß ist, sollte deshalb das Verhalten der Verzögerungseinheit 10 mit Zählern nachgebildet werden, um die Implementierung zu optimieren.

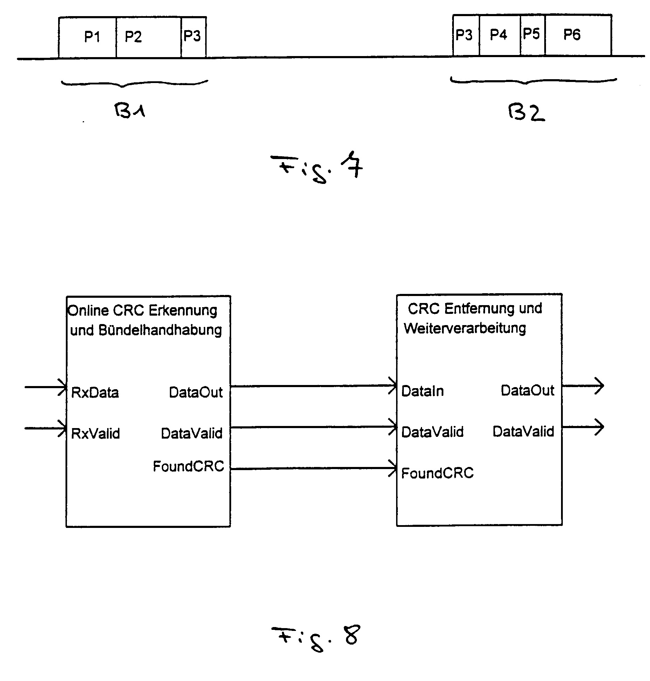

Nach der CRC-Erkennung muß eine Einheit die empfangenen Daten weiterverarbeiten, um zu gewährleisten, daß Pakete mit einer gültigen Struktur an nachfolgende Stufen weitergeleitet werden. Diese Einheit ist rechts in Figur 8 dargestellt, während sich links in Figur 8 die Schaltungsanordnung nach Figur 5 befindet.

Gültige Struktur heißt im Besonderen, daß die Längeninformation verwendet werden kann, um den Anfang des nächsten Pakets zu berechnen, um zu verhindern, daß weitere nachfolgende Einheiten die Synchronisation verlieren.

Deshalb muß die Weiterverarbeitungseinheit folgende Schritte ausführen:

1. Starte die Paketverarbeitung nur, wenn das Signal "CRC gefunden" die Paketposition angibt (Found CRC = 1).

2. Bewerte die Längeninformation.

3. Entferne den CRC-Block.

4. Übertrage die verbleibenden Daten in einer Weise, daß die nachfolgenden Einheiten den Anfang des nächsten Pakets aus der empfangenen Information berechnen können.

5. Starte wieder mit Schritt 1.

Für den Fall, daß ein neues Datenpaket gefunden wird, bevor das gegenwärtige Paket entsprechend der Längeninformation vervollständigt wurde (d. h. falls Daten bei der Übertragung verlorengegangen sind), gibt es verschiedene Möglichkeiten, die Anforderung von Schritt 4 zu erfüllen.

Option 1: Ignorieren des "Found CRC" Signals solange ein Paket noch nicht vollständig empfangen wurde oder noch bearbeitet wird.
Dies führt im Fehlerfall dazu, daß Bits aus dem Kopfteil des nächsten Pakets in den Daten des vorherigen Pakets auftauchen würden. Nachfolgende Einheiten würden deshalb Pakete mit gestörten Daten erhalten und das nächste Paket verlieren.

Option 2: Verfahren identisch zu Option 1, aber Auffüllen des zur Zeit verarbeiteten Pakets mit spezifizierten Leerdaten.
Die nachfolgenden Einheiten wurden dann ein Paket empfangen, dessen Daten in einer klar definierten Art und Weise gestört sind und das nächste Paket verlieren.

Option 3: Verfahren wie unter Option 2, aber die hereinkommenden Daten des nächsten Pakets werden zwischengespeichert, bis diese Daten zu den nachfolgenden Einheiten weitergeleitet werden können.
Die nachfolgenden Einheiten würden dann wiederum ein Paket empfangen dessen Daten in einer klar definierten Art und Weise gestört sind, aber nicht das nächste Paket verlieren.
Jedoch wäre eine Zwischenspeicherung in der Nachverarbeitungseinrichtung notwendig.

Es ist anzumerken, daß Option 1 sehr resistent gegenüber speziellen Eigenheiten der übertragenen Daten wäre. D. h., falls die Nutzdaten 2 zufällig ebenfalls gültige CRC-Codewörter enthalten, wird dies ignoriert. Das System würde sich demnach fehlerhaft synchronisieren, wenn die übertragenen Nutzdaten zufällig Sequenzen enthalten, welche mit einem CRC-Codewort übereinstimmen.

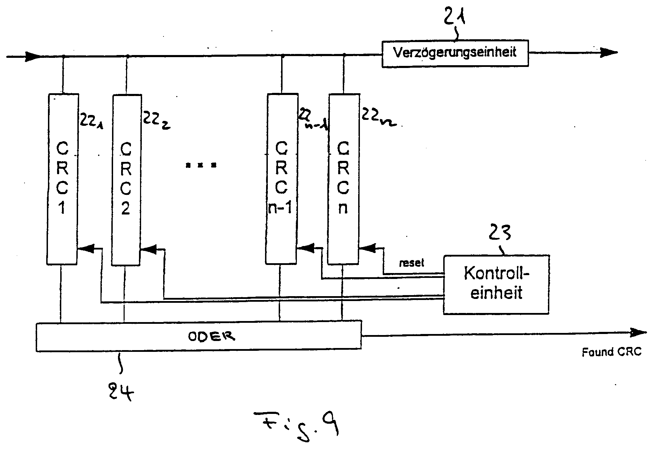

Die Figur 9 zeigt eine Schaltungsanordnung nach einem zweiten Ausführungsbeispiel der vorliegenden Erfindung zur gleitenden CRC-Erkennung. Diese Schaltungsanordnung ist aber gemäß dem ersten Ausführungsbeispiel bezüglich der Hardware aufwendiger.

Hier wird der ankommende bitserielle Datenstrom zu einer Verzögerungseinheit 21 übertragen, die beispielsweise ein Schieberegister mit einer Länge von n Bit sein kann, um das Codewort vollständig aufzunehmen. Gleichzeitig wird der eingehende Datenstrom in n parallele CRC-Berechnungseinheiten geführt, deren Eingänge mit dem Eingang der Verzögerungseinheit 21 verbunden sind. Die CRC-Berechnungseinheiten tragen die Bezugszeichen $22_1$ bis $22_n$. Ihr Rücksetzeingang ist jeweils über eine Leitung mit einer Kontrolleinheit 23 verbunden. Die Ausgänge der CRC-Berechnungseinrichtung $22_1$ bis $22_n$ werden einem ODER-Gatter 24 zugeführt, an dessen Ausgang das Signal Found CRC abgenommen werden kann.

Die CRC-Berechnungseinheit $22_1$, ..., $22_n$ entsprechen in ihrem Aufbau der CRC-Vergleichseinrichtung nach Figur 6, weisen jedoch die dort beschriebenen XOR-Gatter 14, 18, etc. nicht auf, da beim Ausführungsbeispiel nach Figur 9 keine Koeffizienten $a_i$ zu subtrahieren sind.

Die CRC-Berechnungseinheiten $22_1$, ..., $22_n$ werden Reih um von der Kontrolleinheit 23 (oder von einem umlaufenden Schieberegister) zurückgesetzt. Nur eine der CRC-Berechnungseinheiten kann nur dann ein gültiges Codewort finden, wenn diese CRC-Berechnungseinheit genau zu dem Zeitpunkt gestartet wird, zu dem das Prüfdatenfeld beginnt, also im Ausführungsbeispiel zu dem Zeitpunkt, zu dem das Längenfeld beginnt. Wenn in eine dieser CRC-Berechnungseinheiten das Prüffeld bzw. Codewort hineingelaufen ist, steht es gleichzeitig auch in der Verzögerungseinheit 21.

Die CRC-Berechnungseinheit sendet dann ihr Signal Found CRC an die ODER-Schaltung 24, an die alle CRC-Berechnungseinheiten angeschlossen sind. Sobald eine der CRC-Berechnungseinheiten ihr Signal Found CRC (Found CRC = 1) an die ODER-Schaltung verschickt hat, wird der Ausgang der ODER-Schaltung 24 ebenfalls 1. Die nachfolgenden Verarbeitungseinheiten erkennen dann anhand des Signals Found CRC, daß ab jetzt das Prüfdatenfeld aus der Verzögerungseinheit 21 herauskommt, also das Codewort.

Auch beim Ausführungsbeispiel nach Figur 9 berechnen die jeweiligen CRC-Berechnungseinheiten für die jeweiligen Datenpakete eine neue Prüfsumme CRC' und vergleichen diese mit Daten, die für die zugehörige empfangende Prüfsumme angesehen werden, wobei ferner bei dem Vergleich der Einfluß aller Daten eliminiert wird, die nicht zu den Prüfdaten und der Prüfsumme gehören. Diese Eliminierung erfolgt dadurch, daß insgesamt eine der Bitzahl des Codeworts entsprechende Anzahl von CRC-Berechnungseinheiten verwendet wird und nur eine von ihnen das Signal Found CRC ausgeben kann.

Die Prozedur für die weitere Bündelübertragung wurde bereits zuvor beschrieben. Es wird daher lediglich auf die Figuren 7 und 8 verwiesen.

Die Schaltung nach Figur 9 kann auch entsprechend der Figur 5 um die dortige Kontrolleinheit 12 zum Empfang des Signal RxValid und zur Ausgabe des Signals DataValid ergänzt werden sowie um den Schalter sw1, um den Umlauf der in der Verzögerungseinheit 21 gespeicherten Daten am Ende eines Bündels zu ermöglichen. Die Aufgaben der Kontrolleinheit 12 kann auch die in Figur 9 gezeigte Kontrolleinheit 23 mit übernehmen.

**Patentansprüche**

1. Verfahren zur Erkennung der Position von in einem seriellen Empfangsdatenstrom liegenden Datenpaketen (P1, P2, ...), die jeweils Prüfdaten in einem Prüffeld und eine anhand der Prüfdaten gebildete Prüfsumme (CRC) aufweisen, bei dem der Empfangsdatenstrom seriell durch wenigstens eine Vergleichseinheit (9; $22_1$, ..., $22_{72}$) hindurchgeschoben wird, die mit jedem neu hinzukommenden Empfangssymbol eine neue Prüfsumme (CRC') bildet und diese mit Daten, die für die zugehörige empfangene Prüfsumme (CRC) angesehen werden, vergleicht, und bei dem ferner beim Vergleichen der Einfluß aller Daten eliminiert wird, die nicht zu den Prüfdaten und der Prüfsumme (CRC) gehören.

2. Verfahren nach Anspruch 1, **dadurch gekennzeichnet,** daß der Empfangsdatenstrom seriell durch mehrere parallel liegende Vergleichseinheiten ($22_1$, ..., $22_{72}$) hindurchgeschoben wird, die um ein Bit versetzt gegeneinander arbeiten.

3. Verfahren nach Anspruch 1, **dadurch gekennzeichnet,** daß bei nur einer Vergleichseinheit (9) der Empfangsdatenstrom gleichzeit auch seriell durch eine Verzögerungseinheit (10) hindurchgeschoben wird, deren Länge (n) der Anzahl der Bits von Prüfdaten und Prüfsumme entspricht, und daß das Ausgangssignal der Verzögerungseinheit (10), mit Werten ($a_i$) gewichtet, zur Beeinflussung des in der Vergleichseinheit (9) durchgeführten Vergleichs herangezogen wird.

4. Verfahren nach einem der Ansprüche 1 bis 3, **dadurch gekennzeichnet,** daß die Prüfsumme (CRC) aus den Prüfdaten berechnet wird.

5. Verfahren nach Anspruch 4, **dadurch gekennzeichnet,** daß die Berechnung von Prüfsumme (CRC) und neuer Prüfsumme (CRC') jeweils unter Verwendung eines Polynoms

$$G(x) = g_{r-1}x^{r-1} + g_{r-2}x^{r-2} + ... + g_1 x + g_0$$

mit $g_{r-1} = 1$; $g_0 = 1$
erfolgt, wobei x und r bedeuten:
    x = Variable des Polynoms
    r-1 = Grad des Polynoms

6. Verfahren nach Anspruch 3, 4 und 5, **dadurch gekennzeichnet,** daß die Werte ($a_i$) die Koeffizienten des Restes der Polynomdivision
    $x^n$: G(x)
sind.

7. Verfahren nach einem der Ansprüche 2 bis 6, **dadurch gekennzeichnet,** daß der Vergleich zur Erkennung der Prüfsumme (CRC) zwischen Bündeln (B1, B2, ...) unterbrochen wird, in denen sich ganz oder teilweise Datenpakete (P1, P2, ..., P6) befinden.

8. Verfahren nach Anspruch 7, **dadurch gekennzeichnet,** daß die Vergleichseinheit (9) nach jedem Bündel zurückgesetzt wird.

9. Verfahren nach Anspruch 7 oder 8, **dadurch gekennzeichnet,** daß nach Unterbrechung der Vergleichs die in der Verzögerungseinheit (9) vorhandenen Daten einerseits zur nachfolgenden Einheit und andererseits zurück zum Eingang der Verzögerungseinheit (10) sowie zum Eingang der Vergleichseinheit (9) übertragen werden.

10. Verfahren nach einem der Ansprüche 1 bis 9, **dadurch gekennzeichnet,** daß bei einer durch den Vergleich erkannten Prüfsumme (CRC) ein die Erkennung angebendes Signal (Found CRC) mit einem Signal, welches Zusatzinformationen beinhaltet, verknüpft wird.

11. Vorrichtung zum Erkennen der Position von in einem seriellen Empfangsdatenstrom liegenden Datenpaketen (P1, P2, ...), die jeweils Prüfdaten in einem Prüffeld und eine anhand der Prüfdaten gebildeten Prüfsumme (CRC) aufweisen, **gekennzeichnet durch**

- eine Vergleichseinheit (9), durch die der Empfangsdatenstrom seriell hindurchgeschoben wird, und die mit jedem neu hinzukommenden Empfangssymbol eine neue Prüfsumme (CRC') bildet und diese mit Daten, die für die zugehörige empfangene Prüfsumme (CRC) angesehen werden, vergleicht;
- eine Verzögerungseinheit (10), die den Empfangsdatenstrom ebenfalls seriell empfängt, und deren Länge (n) der Anzahl der Bits der Prüfdaten und der Prüfsumme (CRC) entspricht; und
- eine zwischen dem Ausgang der Verzögerungseinheit (10) und weiteren Eingängen der Vergleichseinheit (9) liegende Rückkopplungsstufe (11) zur Bildung von Werten, um den Einfluß aller Daten auf den Vergleich zu eliminieren, die nicht zu den Prüfdaten und der Prüfsumme (CRC) gehören.

12. Vorrichtung nach Anspruch 11, **gekennzeichnet durch** einen ersten Umschalter (sw1), über den entweder der Empfangsdatenstrom oder der Ausgang der Verzögerungseinheit (10) zur Vergleichseinheit (9) und zur Verzögerungseinheit (10) übertragbar sind, und einen zweiten Umschalter (sw2), über den zur Rückkopplungsstufe (11) entweder der Ausgang der Verzögerungseinheit (10) oder ein Referenzpotential übertragbar sind,

13. Vorrichtung nach Anspruch 12, **gekennzeichnet durch** eine Kontrolleinheit (12) zur Steuerung der Schalterstellungen der Umschalter (sw1, sw2).

14. Vorrichtung nach Anspruch 13, **gekennzeichnet durch** eine Leitungsverbindung zur Lieferung eines Rücksetzsignals von der Kontrolleinheit (12) zur Vergleichseinheit (9).

15. Vorrichtung nach einem der Ansprüche 11 bis 14, **dadurch gekennzeichnet,** daß die Vergleichseinheit (9) als rückgekoppeltes Schieberegister ausgebildet ist und die Prüfsumme (CRC) unter Verwendung des Polynoms

$$G(x) = g_{r-1}x^{r-1} + g_{r-2}x^{r-2} + ... + g_1 x + g_0$$

mit $g_{r-1} = 1$; $g_0 = 1$

berechnet, wobei x = Variable des Polynoms und r- 1 = Grad des Polynoms sind, und daß sie Paralleleingänge für Koeffizienten ($a_0$, ..., $a_{r-2}$) aufweist, die über Exklusiv-Oder-Gatter (XOR) in jeweilige Wandlerstufen einkoppelbar sind.

16. Vorrichtung nach einem der Ansprüche 11 bis 15, **dadurch gekennzeichnet,** daß ihr eine Stufe zur Entfernung der Prüfsumme (CRC) aus dem Empfangsdatenstrom nachgeschaltet ist.

17. Vorrichtung zum Erkennen der Position von in einem seriellen Empfangsdatenstrom liegenden Datenpaketen (P1, P2, ...), die jeweils Prüfdaten in einem Prüffeld und eine anhand der Prüfdaten gebildete Prüfsumme aufweisen, **gekennzeichnet durch**

- eine der Anzahl der Bits der Prüfdaten und der Prüfsumme (CRC) entsprechenden Anzahl von parallel liegenden Vergleichseinheiten ($22_1$, $22_2$, ..., $22_n$), durch die der Empfangsdatenstrom seriell hindurchgeschoben wird, und die mit jedem neu hinzukommenden Empfangssymbol eine neue Prüfsumme (CRC') bilden und diese mit Daten, die führ die zugehörige empfangene Prüfsumme (CRC) angesehen werden, vergleichen;
- eine Verzögerungseinheit (21), die den Empfangsdatenstrom ebenfalls seriell empfängt, und deren Länge (n) der Anzahl der Bits der Prüfdaten und der Prüfsumme (CRC) entspricht; und
- ein mit dem Ausgang aller Vergleichseinheiten verbundenes Logikgatter (24) zur Lieferung eines Signals (Found CRC), wenn in einer der Vergleichseinheiten der Vergleich positiv ausgefallen ist.

18. Vorrichtung nach Anspruch 17, **dadurch gekennzeichnet,** daß das Logikgatter (24) ein ODER-Gatter ist.

19. Vorrichtung nach Anspruch 17 oder 18, **dadurch gekennzeichnet,** daß der Inhalt der Verzögerungseinheit (21) über einen Schalter auf ihren Eingang zurückführbar ist.

Fig. 1

kontinuierlicher Datenstrom

Fig. 2

Fig. 3

Fig. 4

*12*

Kontrolleinheit

RxValid

DataValid

*10*

Verzögerungseinheit; Länge n

DataOut

*b* sw1

data in

*a* *c*

*13*

reset

*9*

a0

a1

a2

sw2

*c* *b*

*a*

an-1

*11*

FoundCRC

Fig. 5

Fig.6

EP 0 898 395 A2

| P1 | P2 | P3 |
|----|----|----|

B1

| P3 | P4 | P5 | P6 |
|----|----|----|----|

B2

Fig. 7

| Online CRC Erkennung und Bündelhandhabung | |
|---|---|
| RxData | DataOut |
| RxValid | DataValid |
| | FoundCRC |

| CRC Entfernung und Weiterverarbeitung | |
|---|---|
| DataIn | DataOut |
| DataValid | DataValid |
| FoundCRC | |

Fig. 8

Fig. 9